Europäisches Patentamt

European Patent Office

Office européen des brevets

(19)

(11) **EP 0 576 414 B1**

(12) **EUROPÄISCHE PATENTSCHRIFT**

(45) Veröffentlichungstag und Bekanntmachung des Hinweises auf die Patenterteilung:
**08.08.2001   Patentblatt 2001/32**

(51) Int Cl.[7]: **C21B 13/14**

(21) Anmeldenummer: **93890095.8**

(22) Anmeldetag: **11.05.1993**

(54) **Verfahren zur Herstellung von flüssigem Roheisen oder flüssigen Stahlvorprodukten sowie Anlage zur Durchführung des Verfahrens**

Process for the production of molten pig iron or steel pre-products as well as arrangement for carrying out the process

Procédé pour la production de la fonte liquide ou des ébauches en acier ainsi que dispositif pour la mise en oeuvre de ce procédé

(84) Benannte Vertragsstaaten:
**DE ES FR GB IT SE**

(30) Priorität: **21.05.1992  AT  105492**

(43) Veröffentlichungstag der Anmeldung:
**29.12.1993   Patentblatt 1993/52**

(73) Patentinhaber:
  • **VOEST-ALPINE INDUSTRIEANLAGENBAU GMBH**
    **4020 Linz (AT)**
  • **POHANG IRON & STEEL CO., LTD.**
    **Pohang City, Kyong Sang Book-Do 790-300 (KR)**
  • **RESEARCH INSTITUTE OF INDUSTRIAL SCIENCE & TECHNOLOGY, INCORPORATED FOUNDATION**
    **Pohang City, Kyong Sang Book-do 790-330 (KR)**

(72) Erfinder:
  • **Kepplinger, Leopold Werner, Dipl.-Ing. Dr.**
    **A-4060 Leonding (AT)**
  • **Matzawrakos, Panajiotis, Dipl.-Ing.**
    **A-4020 Linz (AT)**
  • **Schenk, Johannes, Dipl.-Ing. Dr.**
    **A-4040 Linz (AT)**
  • **Siuka, Dieter, Dipl.-Ing.**
    **A-4501 Neuhofen (AT)**

(74) Vertreter: **Kopecky, Helmut, Dipl.-Ing.**
    **Kopecky & Schwarz**
    **Patentanwälte**
    **Wipplingerstrasse 32/22**
    **1010 Wien (AT)**

(56) Entgegenhaltungen:
  **EP-A- 0 368 835          EP-A- 0 481 955**
  **EP-A- 0 493 752          EP-B- 0 010 627**
  **AT-B- 378 970            AT-B- 381 116**
  **AT-B- 402 440            DE-B- 1 137 056**
  **DE-C- 1 026 081**

  • **Perry's Chemical Engineering Handbook, 6. Auflage, McGraw-Hill Book Company, Seiten 9-41 und 9-42**

**Beschreibung**

Die Erfindung betrifft ein Schmelzreduktionsverfahren zur Herstellung von flüssigem Roheisen oder flüssigen Stahlvorprodukten aus stückigen, eisenerzhältigen Einsatzstoffen, die in einem Reduktionsschachtofen mittels. eines Reduktionsgases reduziert werden, wobei die erhaltenen reduzierten Eisenpartikel in einem Einschmelzvergaser unter Zuführung von Kohle und sauerstoffhältigem Gas bei gleichzeitiger Bildung des Reduktionsgases eingeschmolzen werden und das Reduktionsgas der Reduktionszone des Schachtofens zugeführt wird, sowie eine Anlage zur Durchführung des Verfahrens.

Ein Verfahren dieser Art sowie eine Anlage zur Durchführung des Verfahrens sind aus der EP-B - 0 010 627, der AT-B - 378.970 sowie der AT-B - 381.116 bekannt. Der besondere Vorteil eines solchen Verfahrens ist darin zu sehen, daß der Einsatz von eisenhältigem Material mit einem sehr breiten Stückgrößenspektrum, insbesondere im Bereich zwischen 10 und 30 mm, sowie der Einsatz von Kohlenstoffträgern mit stark variierendem Kohlenstoffgehalt ohne aufwendige Maßnahmen möglich ist und daß eine ausreichende Energiezufuhr ohne Gefahr einer gleichzeitigen Reoxidation des Einsatzes sichergestellt ist. Selbst Kohlen mit einem hohen Aschegehalt und einem hohen Anteil an flüchtigen Bestandteilen lassen sich ohne weiteres einsetzen.

Aus der AT-B - 381.116 ist es bekannt, bei Verwendung von nicht metallurgischer Kohle eine zusätzliche Wärmezuführung für den Einschmelzvergaser durch Verbrennen von aus dem Reduktionsgas abgeschiedenen Kohleteilchen vorzusehen.

Die vorliegende Erfindung setzt sich zum Ziel, die oben beschriebenen Verfahren dahingehend weiterzuentwickeln, daß auch Feinerz und/oder Erzstaub, wie in einem Hüttenwerk anfallender oxidischer Eisenfeinstaub, eingesetzt werden kann, u.zw. vorzugsweise in einer Menge, welche 20 bis 30 % des normalen oxidischen Erzeinsatzes der oben beschriebenen Verfahren entspricht.

Gemäß der EP 0 368 835 A, die ebenfalls ein Verfahren der eingangsbeschriebenen Art als bekannt zeigt, werden Erze mit einem breiten Korngrößenspektrum reduziert und nach dem Reduzieren in einem Einschmelzvergaser zu flüssigem Roheisen erschmolzen. Hierbei wird stets eine Mischung aus Fein- und Stückerz, in einen Reduktionsreaktor eingebracht. Um eine gleichmäßige Reduktion des Feinkornanteiles und des Grobkornanteiles sicherzustellen, werden der Feinkornanteil über eine Schnecke und den Grobkornanteil über die Austragvorrichtung aus dem Reduktionsreaktor ausgefördert, u.zw. jeweils im fertigreduzierten Zustand und in den Einschmelzvergaser eingebracht.

Diese Aufgabe wird erfindungsgemäß durch die Merkmale des Anspruchs 1 gelöst.

Wesentlich hierbei ist, daß die Verbrennung im Staubbrenner derart erfolgt, daß keine prozeßstörenden Komponenten gebildet werden, d.h. es muß gewährleistet sein, daß die Verbrennungsreaktion unterstöchiometrisch nach der chemischen Gleichung

$$C + 1/2\ O_2 \rightarrow CO - 111\ kJ/mol$$

verläuft und nicht nach der Gleichung

$$C + O_2 \rightarrow CO_2 - 395\ kJ/mol,$$

weil das $CO_2$ für die Reduktion der oxidischen Fe-Stäube unerwünscht ist. Das entstehende CO geht anschließend in das Prozeßgas und die verflüssigten Staubteilchen gehen in die Schlacke bzw. in das Roheisenbad des Einschmelzvergasers über. Zu diesem Zweck muß der Brennerbetrieb so eingestellt werden, daß das molare Sauerstoff-Brennstoffverhältnis, hier $O_2$ zu C, mehr als 0,5, bevorzugt 0,6 beträgt.

Das erfindungsgemäße Verfahren ermöglicht die Verarbeitung von sämtlichen Eisen-Feinerzen, wie sie beim Transport und sonst in einem Hüttenwerk anfallen, wobei ein bisher übliches Agglomerieren eingespart werden kann.

Eine vorteilhafte Variante des erfindungsgemäßen Verfahrens ist dadurch gekennzeichnet, daß das Reduktionsgas gekühlt und

entstaubt und der aus dem Reduktionsgas abgeschiedene Staub in den Einschmelzvergaser über den Staubbrenner gemeinsam mit dem Feinerz bzw. dem Erzstaub und den festen Kohlenstoffträgern rückgeführt wird.

Zur Erzielung einer guten Durchmischung und Vorwärmung und einer Vorreduktion des Gemisches aus Feinerz mit Kohlenstoffträgern wird gemäß einer bevorzugten Ausführungsform das Feinerz bzw. der Erzstaub in das aus dem Einschmelzvergaser gewonnene ungereinigte Reduktionsgas eingebracht und in diesem vorgewärmt und vorreduziert, worauf das Feinerz bzw. der Erzstaub gemeinsam mit dem Staub des Reduktionsgases aus diesem abgeschieden und dem Staubbrenner zugeführt wird.

Zweckmäßig werden hierbei die festen Kohlenstoffträger gemeinsam mit dem Feinerz bzw. dem Erzstaub dem Reduktionsgas beigegeben.

Eine andere vorteilhafte Variante ist dadurch gekennzeichnet, daß die festen Kohlenstoffträger dem Staubbrenner direkt zugeführt werden, wodurch sich eine geringere Beeinflussung der Rückführung der aus dem Reduktionsgas abgeschiedenen Stäube zum Einschmelzvergaser ergibt.

Um eine solche Beeinflussung zur Gänze auszuschalten, werden vorteilhaft das Feinerz bzw. der Erzstaub gemeinsam mit den festen Kohlenstoffträgern dem Staubbrenner direkt zugeführt.

Zur Erzielung einer guten Durchmischung des Feinerzes mit den Kohlenstoffträgern und den aus dem Reduktionsgas abgeschiedenen Stäuben ohne wesentliche Beeinflussung des die Stäube abscheidenden Systems, wird gemäß einer bevorzugten Ausführungsform das Feinerz bzw. der Erzstaub gemeinsam mit den festen Kohlenstoffträgern mit dem aus dem Reduktionsgas abgeschiedenen Staub über ein dem Staubbrenner vorgeordnetes Druckausgleichs-Schleusensystem dem Staubbrenner zugeführt.

Um die Bildung von Entgasungsprodukten in dem die Stäube aus dem Reduktionsgas abscheidenden System zu verhindern, wird vorteilhaft als fester Kohlenstoffträger Koks eingesetzt.

Bei direkter Zuführung der Kohlenstoffträger zum Staubbrenner wird zweckmäßig als fester Kohlenstoffträger Kohle, insbesondere beim Verfahren nach Anspruch 1 anfallender Kohlestaub, eingesetzt.

Eine Anlage zur Durchführung des Verfahrens weist folgende Merkmale auf :

- einen Reduktionsschachtofen für stückiges Eisenerz und
- einen Einschmelzvergaser zur Aufnahme des im Reduktionsschachtofen gebildeten Reduktionsproduktes, wobei eine Feinerz- bzw. Erzstaub-Aufgabeeinrichtung sowie eine Aufgabeeinrichtung für feste Kohlenstoffträger, die beide leitungsmäßig vom Reduktionsschachtofen unabhängig sind, leitungsmäßig mit mindestens einem Staubbrenner des Einschmelzvergasers verbunden sind.

Eine bevorzugte Ausführungsform ist dadurch gekennzeichnet, daß eine Reduktionsgas aus dem Einschmelzvergaser ableitende Gasleitung mit einem Zyklon versehen ist und in den Reduktionsschachtofen mündet, wobei der Zyklon über ein Schleusensystem, eine Staubfördereinrichtung, wie einen Injektor, und über eine Förderleitung mit dem Staubbrenner des Einschmelzvergasers leitungsmäßig verbunden ist und eine von der Feinerz- bzw. der Erzstaub-Aufgabeeinrichtung ausgehende Chargierleitung in die zwischen dem Einschmelzvergaser und dem Zyklon vorgesehene Gasleitung mündet, wobei vorteilhaft die Aufgabeeinrichtung für feste Kohlenstoffträger mit der Chargierleitung für Feinerz bzw. Erzstaub leitungsmäßig verbunden ist.

Eine andere zweckmäßige Ausführungsform ist dadurch gekennzeichnet, daß von der Aufgabeeinrichtung für feste Kohlenstoffträger eine eigene Chargierleitung ausgeht und direkt in die die Staubfördereinrichtung mit dem Staubbrenner verbindende Förderleitung mündet.

Eine weitere vorteilhafte Ausführungsform ist dadurch gekennzeichnet, daß eine Reduktionsgas aus dem Einschmelzvergaser ableitende Gasleitung mit einem Zyklon versehen ist und in den Reduktionsschachtofen mündet, wobei der Zyklon über ein Schleusensystem, eine Staubfördereinrichtung, wie einen Injektor, und über eine Förderleitung mit dem Staubbrenner des Einschmelzvergasers leitungsmäßig verbunden ist und eine der Feinerz- bzw. der Erzstaub-Aufgabeeinrichtung und der Aufgabeeinrichtung für Kohlenstoffträger gemeinsame Chargierleitung in das Schleusensystem zwischen dem Zyklon und dem Staubbrenner einmündet.

Vorteilhaft ist eine Reduktionsgas aus dem Einschmelzvergaser ableitende Gasleitung mit einem Zyklon versehen und mündet in den Reduktionsschachtofen, wobei der Zyklon über ein Schleusensystem, eine Staubfördereinrichtung, wie einen Injektor, und über eine Förderleitung mit dem Staubbrenner des Einschmelzvergasers leitungsmäßig verbunden ist und eine der Feinerz- bzw. der Erzstaub-Aufgabeeinrichtung und der Aufgabeeinrichtung für Kohlenstoffträger gemeinsame Chargierleitung in die Förderleitung zwischen der Staubfördereinrichtung und dem Staubbrenner mündet.

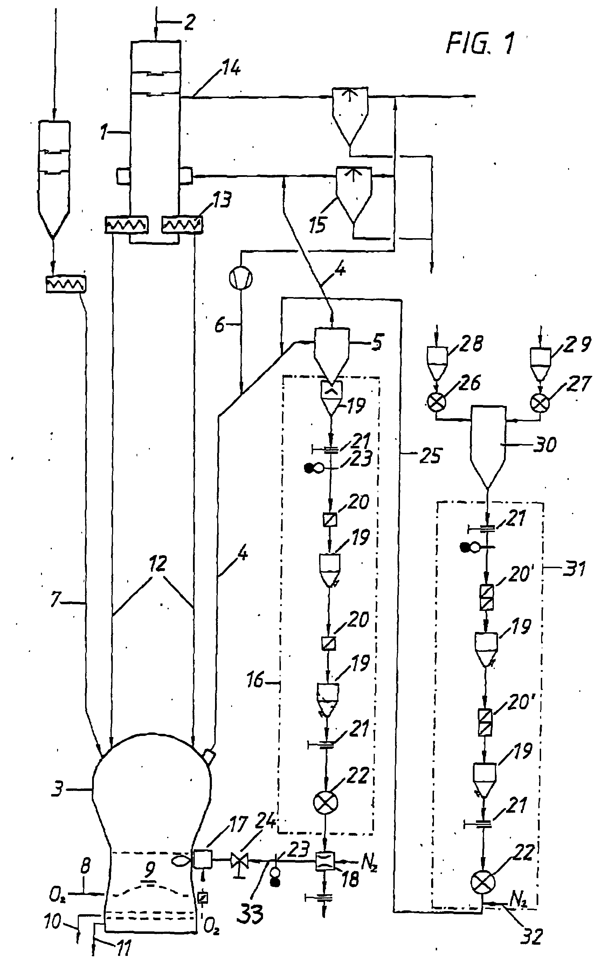

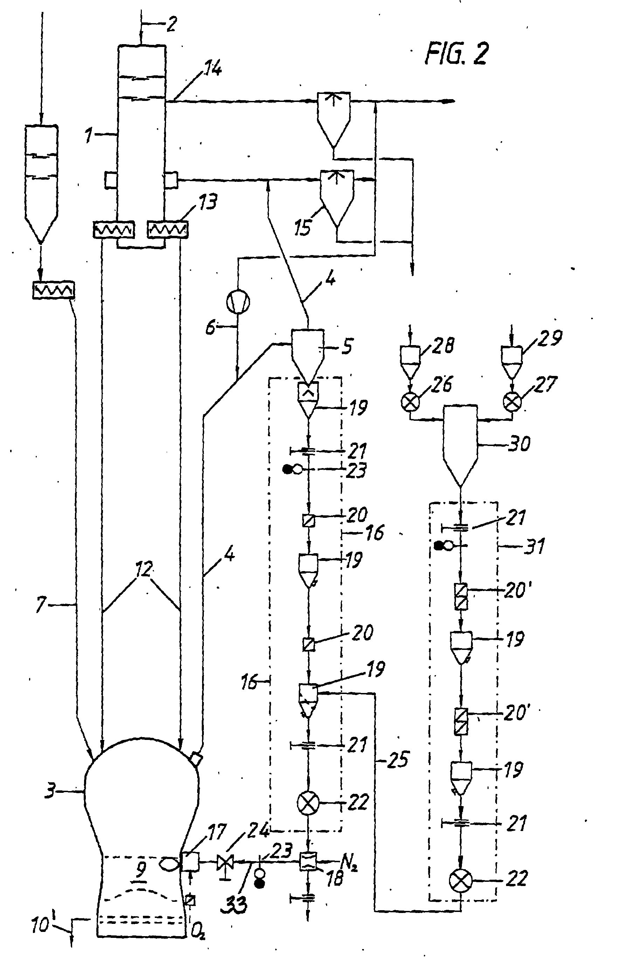

Die Erfindung ist nachfolgend anhand mehrerer in der Zeichnung dargestellter Ausführungsbeispiele näher erläutert, wobei Fig. 1 in schematischer Darstellung eine Anlage zur Durchführung des erfindungsgemäßen Verfahrens nach einer ersten Ausführungsform und die Fig. 2 bis 4 in analoger Darstellung weitere Ausführungsformen veranschaulichen.

Mit 1 ist eine als Schachtofen ausgebildete Reduktionseinrichtung bezeichnet, in deren Reduktionszone von oben über eine Zuleitung 2 stückige eisenoxidhältige Einsatzstoffe, gegebenenfalls zusammen mit Zuschlägen, chargiert werden. Der Schachtofen 1 steht mit einem Einschmelzvergaser 3 in Verbindung, in dem aus Kohlenstoffträgern und sauerstoffhältigem Gas ein Reduktionsgas erzeugt wird, welches über eine Gasleitung 4 dem Schachtofen 1 zugeführt wird und entgegen dem Strom des nach unten sinkenden Eisenerzes nach oben aufsteigt und die Reduktion des Eisenerzes bewirkt. In der Gasleitung 4 ist eine Gasreinigungseinrichtung 5 vorgesehen, die als Heißgaszyklon ausgebildet ist. Zur Kühlung des Reduktionsgases mündet in die Gasleitung 4 eine Kühlgasleitung 6, u.zw. bevor die Gasleitung 4 in den Heißgaszyklon 5 mündet.

Der Einschmelzvergaser 3 weist eine Zuführung 7 für feste, stückige Kohlenstoffträger und eine Zuleitung 8 für ein sauerstoffhältiges Gas auf. In dem Einschmelzvergaser 3 sammeln sich unterhalb der Einschmelzvergasungszone 9 schmelzflüssige Schlacke und schmelzflüssiges Roheisen, die über je einen eigenen Abstich 10, 11 getrennt oder über einen gemeinsamen Abstich 10', wie in den Fig. 2, 3 und 4 dargestellt, abgestochen werden.

Das im Schachtofen 1 in der Reduktionszone reduzierte stückige Erz wird zusammen mit den in der Reduktionszone gebrannten Zuschlägen über den Schachtofen 1 mit dem Einschmelzvergaser 3 verbindende Leitungen 12 dem Einschmelzvergaser 3 zugeführt, beispielsweise mittels Austragschnecken 13. An dem oberen Teil des Schachtofens 1 schließt eine Ableitung 14 für das in dessen Reduktionszone entstehende Topgas an. Ein Teil des Reduktionsgases wird nach Durchtritt durch eine Gasreinigungseinrichtung 15 über die Leitung 6 als Kühlgas in die Gasleitung 4 eingespeist.

Der im Heißgaszyklon 5 abgeschiedene Staub wird über ein Schleusensystem 16 zu mindestens einem Staubbrenner 17 am Einschmelzvergaser 3 über einen mittels Stickstoffgas betriebenen Injektor 18 transportiert. Das Schleusensystem 16 dient zur Überwindung der Druckdifferenz zwischen dem Heißgaszyklon 5 und dem Staubbrenner 17, u.zw. einer Zone niedrigeren Druckes im Heißgaszyklon 5 und einer Zone höheren Druckes am Staubbrenner 17. Es ist aus Staubbehältern 19 und zwischen den Staubbehältern 19 angeordneten Schiebern 20 - das sind gas- und materialdichte Absperrorgane -, Flachschiebern 21 sowie wenigstens ein Dosierorgan, z.B. eine Zellenradschleuse 22 und einer Steckblende 23 gebildet. Zwischen dem Injektor 18 und dem Staubbrenner sind weiters ein Kugelhahn 24 und eine weitere Steckblende 23 vorgesehen.

Gemäß der in Fig. 1 dargestellten Ausführungsform wird in die zwischen dem Einschmelzvergaser 3 und dem Heißgaszyklon 5 vorgesehene Gasleitung 4 ein Gemisch von Koksstaub und Feinerz und/oder Erzstaub über eine Chargierleitung 25 zugeführt, wobei es zu einer Durchmischung, Vorwärmung und Vorreduktion des zugeführten Gemisches im Heißgaszyklon 5, der dann als Reduktionszyklon arbeitet, kommt. Infolge der Verwendung von Koksstaub wird die Bildung von Entgasungsprodukten im Schleusensystem 16 vermieden. Das Feinerz und/oder der Erzstaub sowie der Koksstaub werden über jeweils eigene Zellenradschleusen 26, 27 von Vorratsbehältern 28, 29 einem gemeinsamen Mischbunker 30 zugeführt, von dem das Gemisch über ein Schleusensystem 31, das aus in der Chargierleitung angeordneten Flachschiebern 21, Staubbehältern 19 und zwischen diesen angeordneten Druckschleusenklappen 20' sowie einem weiteren Dosierorgan 22 besteht, in die Gasleitung 4 eingespeist wird.

Dem weiteren Dosierorgan 22, z.B. einer Zellenradschleuse, nachgeordnet ist eine Stickstoffzuführungsleitung 32, die in die Chargierleitung 25 mündet. Mit Hilfe des Schleusensystems 31 wird die Druckdifferenz zwischen dem Mischbunker 30 und der Gasleitung 4 überwunden.

Das vom Heißgaszyklon 5 dem Staubbrenner 17 zugeführte Gemisch wird mit Hilfe dieses Staubbrenners 17 in einer unterstöchiometrischen Verbrennungsreaktion umgesetzt. Das hierbei entstehende CO geht in das Reduktionsgas über. Die infolge der Verbrennungshitze schmelzenden Staubteilchen gelangen in die Schlacke bzw. in das Roheisenbad.

Gemäß der in Fig. 2 dargestellten Ausführungsform mündet die Chargierleitung 25 in das zwischen Heißgaszyklon 5 und dem Staubbrenner 17 angeordnete Schleusensystem 16, u.zw. in den letzten in diesem Schleusensystem 16 vorgesehenen Staubbehälter 19. Diese Variante ist insbesondere dann von Vorteil, wenn größere Mengen von Feinerz chargiert werden sollen, wobei eine Beeinflussung des Heißzyklons 5 vermieden wird.

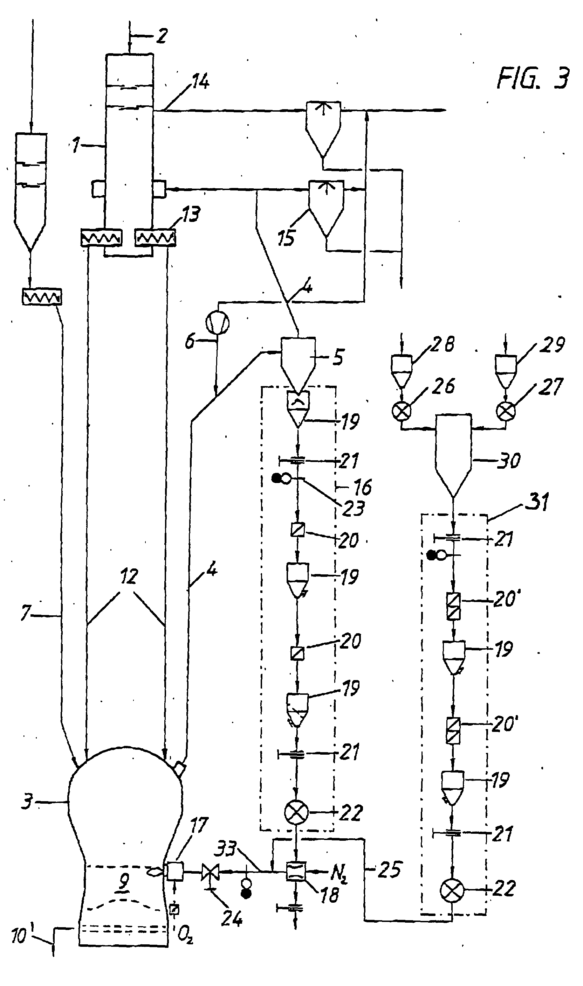

Gemäß der in Fig. 3 dargestellten Ausführungsform mündet die Chargierleitung 25 zwischen dem Injektor 18 und dem Staubbrenner 17 in die vom Injektor zum Staubbrenner führende Leitung 33, womit ebenfalls eine Beeinflussung des Betriebs des Heißzyklons 5 vermieden wird. Der besondere Vorteil dieser Variante ist darin zu sehen, daß anstelle von Koksstaub Kohlestaub eingesetzt werden kann, da eine Entgasung der Kohle erst im Einschmelzvergaser stattfindet und nicht zu einer Störung der Staubrückführung im Heißgaszyklon 5 oder im Schleusensystem 16 führen kann.

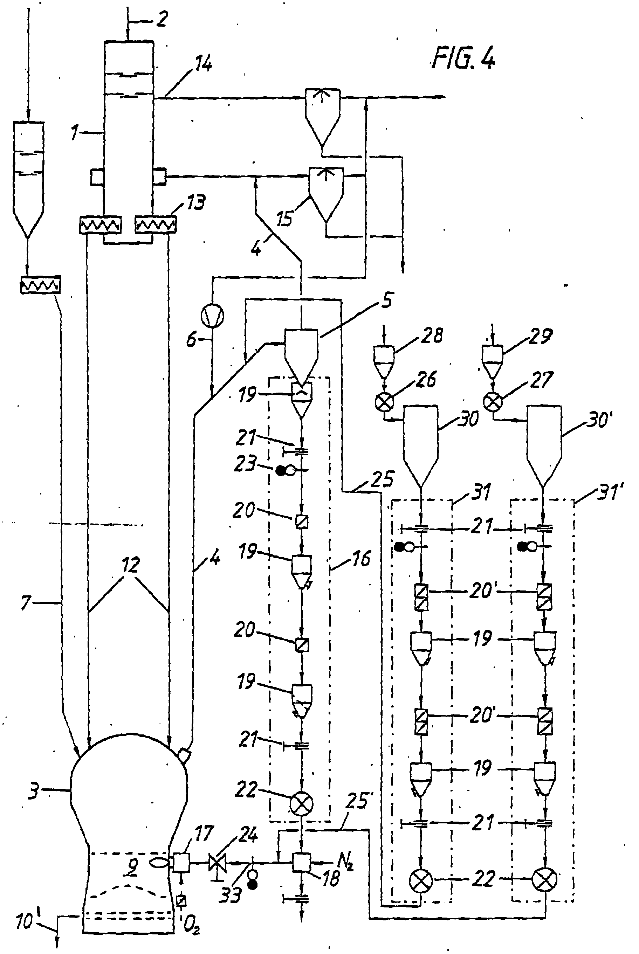

Gemäß der in Fig. 4 dargestellten Ausführungsform werden die Feinerze und/oder der Erzstaub - getrennt vom Kohlestaub - der in den Heißgaszyklon 5 führenden Gasleitung 4 über eine Chargierleitung 25, und der Kohlestaub, separat hiervon, in die vom Injektor 18 zum Gasbrenner 17 führende Leitung 33 über eine eigene Chargierleitung 25' chargiert, wobei in jeder Chargierleitung 25, 25' ein eigenes Schleusensystem 31, 31' vorgesehen ist, so daß eine Anpassung an die unterschiedlichen Drücke der Gasleitung 4 und Leitung 33 erzielt werden kann. Hierbei läßt sich der Vorteil der Reduktion des Erzstaubes im Heißgaszyklon mit dem Vorteil der Kohlechargierung verbinden, so daß hier ebenfalls so wie bei der in Fig. 3 dargestellten Variante eine Verwertung von in der Anlage anfallendem Kohlestaub von der Kohleabsiebung und der Entstaubungsanlage der Kohletrocknung möglich ist.

Anhand des nachstehenden Beispieles ist das Verfahren nach der in Fig. 1 dargestellten Variante näher erläutert:

Die Analyse des Staubes im Reduktionsgas am Austritt des Einschmelzvergasers war wie folgt (in Gew.%):

| Fe | 31,8 % |
|---|---|
| C | 50,5 % |
| CaO | 3,0 % |
| MgO | 0,8 % |
| $SiO_2$ | 8,3 % |
| $Al_2O_3$ | 5,6 % |

Der Staubgehalt des Reduktionsgases betrug 150 g/m$^3$ (bei Normalbedingungen).

Die Analyse des eingesetzten Feinerzes (feuchte Werte) für Erz von San Isidoro, Brasilien, ist in nachstehender Tabelle angegeben (in Gew.%):

| $Fe_2O_3$ (Fe) | 92,02 % (64,41 %) |
|---|---|
| CaO | 0,09 % |
| MgO | 0,05 % |

(fortgesetzt)

| SiO$_2$ | 1,16 % |
|---|---|
| Al$_2$O$_3$ | 0,47 % |
| MnO | 0,05 % |
| Glühverluste | 2,85 % |
| Feuchte | 3,08 % |
| Rest, sonstiges | 0,32 % |

Die Korngrößenverteilung des Feinerzes betrug (in Gew.%):

| < 20 μm | 2 % |
|---|---|
| 20 - 63 μm | 16 % |
| 125 - 63 μm | 35 % |
| 250 - 125 μm | 39 % |
| > 250 μm | 8 % |

Es wurde Feinerz im Anteil von 30 Gew.% des Gesamt-Fe-Einsatzes chargiert und erschmolzen.

Die Analyse des eingesetzten Kokses war wie folgt (in Gew.%):

| C | 97,2 % |
|---|---|
| H | 0,12 % |
| N + O | 1,71 % |
| S | 0,97 % |
| C$_{fix}$ | 88,1 % |
| Ascheanteil | 11,3 % |

Die Vorreduktion des Feinerzes in der Gasleitung 4 und im Heißzyklon 5 betrug 53 Gew.%. Für die Reduktion im Staubbrenner 17 wurden 50 kg Koks und 311 m$^3$ (bei Normalbedingungen) O$_2$ pro t Feinerz eingesetzt.

Es konnten 9,3 t Roheisen/h mit einem Gesamterzeinsatz von 14,8 t/h erzeugt werden. Das im Einschmelzvergaser 3 erzeugte Roheisen hatte neben Eisen folgende Bestandteile (in Gew.%):

| C | 3,9 - 4,2 % |
|---|---|
| Si | 0,4 - 0,6 % |
| P | 0,012 % |
| Mn | 0,1% |
| S | 0,04 - 0,06 % |

Bei gleichem Feinerzeinsatz wird gemäß der in Fig. 4 dargestellten Variante anstelle von Koks Kohle eingesetzt.

Analyse der eingesetzten Kohle:

| C | 81,4 % |
|---|---|
| H | 4,8 % |
| N | 1,4 % |

(fortgesetzt)

| O | 5,8 % |
|---|---|
| S | 0,5 % |
| C$_{fix}$ | 62,9 % |
| Ascheanteil | 6,2 % |

Der Kohleverbrauch betrug 376 kg und der O$_2$-Verbrauch 460 Nm$^3$ pro t Feinerz.

Es konnten 9,1 t Roheisen/h erzeugt werden mit einem Gesamterzeinsatz von 14,5 t/h. Das im Einschmelzvergaser erzeugte Roheisen hatte neben Eisen folgende Bestandteile:

| C | 3,9 - 4,2 % |
|---|---|
| Si | 0,4 - 0,6 % |
| P | 0,01 % |
| Mn | 0,1 % |
| S | 0,04 - 0,06 % |

**Patentansprüche**

1. Schmelzreduktionsverfahren zur Herstellung von flüssigem Roheisen oder flüssigen Stahlvorprodukten aus stückigen, eisenerzhältigen Einsatzstoffen, die in einem Reduktionsschachtofen (1) mittels eines Reduktionsgases reduziert werden, wobei die erhaltenen reduzierten Eisenpartikel in einem Einschmelzvergaser (3) unter Zuführung von Kohle und sauerstoffhältigem Gas bei gleichzeitiger Bildung des Reduktionsgases eingeschmolzen werden und das Reduktionsgas der Reduktionszone des Schachtofens (1) zugeführt wird, dadurch gekennzeichnet, daß zusätzlich zu den im Reduktionsschachtofen (1) eingesetzten Einsatzstoffen Feinerz und/oder Erzstaub, wie in einem Hüttenwerk anfallender oxidischer Eisen-Feinstaub, unter Umgehung des Reduktionsschachtofens (1) eingesetzt wird, wobei das Feinerz und/oder der Erzstaub mit festen Kohlenstoffträgern mindestens einem in den Einschmelzvergaser (3) arbeitenden Staubbrenner (17) zugeführt und in einer unterstöchiometrischen Verbrennungsreaktion umgesetzt werden, wobei der Brennerbetieb so eingestellt wird, daß das molare Sauerstoff-Brennstoffverhältnis mehr als 0,5 beträgt.

2. Verfahren nach Anspruch 1, dadurch gekennzeichnet, daß das Reduktionsgas gekühlt und entstaubt und der aus dem Reduktionsgas abgeschiedene Staub in den Einschmelzvergaser (3) über den Staubbrenner (17) gemeinsam mit dem Feinerz bzw. dem Erzstaub und den festen Kohlenstoffträgern rückgeführt wird.

3. Verfahren nach Anspruch 2, dadurch gekennzeichnet, daß das Feinerz bzw. der Erzstaub in das aus dem Einschmelzvergaser (3) gewonnene ungereinigte Reduktionsgas eingebracht und in diesem vorgewärmt und vorreduziert wird, worauf das Feinerz bzw. der Erzstaub gemeinsam mit dem Staub des Reduktionsgases aus diesem abgeschieden und dem Staubbrenner (17) zugeführt wird (Fig. 1, 4).

4. Verfahren nach Anspruch 3, dadurch gekennzeichnet, daß die festen Kohlenstoffträger gemeinsam mit dem Feinerz bzw. dem Erzstaub dem Reduktionsgas beigegeben werden (Fig. 1).

5. Verfahren nach Anspruch 3, dadurch gekennzeichnet, daß die festen Kohlenstoffträger dem Staubbrenner (17) direkt zugeführt werden (Fig. 4).

6. Verfahren nach Anspruch 2, dadurch gekennzeichnet, daß das Feinerz bzw. der Erzstaub gemeinsam mit den festen Kohlenstoffträgern dem Staubbrenner (17) direkt zugeführt werden (Fig. 3).

7. Verfahren nach Anspruch 2, dadurch gekennzeichnet, daß das Feinerz bzw. der Erzstaub gemeinsam mit den festen Kohlenstoffträgern und mit dem aus dem Reduktionsgas abgeschiedenen Staub über ein dem Staubbrenner (17) vorgeordnetes Druckausgleichs-Schleusensystem (16) dem Staubbrenner (17) zugeführt wird (Fig. 2).

8. Verfahren nach Anspruch 4 oder 7, dadurch gekennzeichnet, daß als fester Kohlenstoffträger Koks eingesetzt wird (Fig. 1, 2).

9. Verfahren nach Anspruch 5 oder 6, dadurch gekennzeichnet, daß als fester Kohlenstoffträger Kohle, insbesondere beim Verfahren nach Anspruch 1 anfallender Kohlestaub, eingesetzt wird (Fig. 3, 4).

10. Anlage zur Durchführung des Verfahrens nach einem oder mehreren der Ansprüche 1 bis 9, mit den folgenden Merkmalen :

   - mit einem Reduktionsschachtofen (1) für stükkiges Eisenerz und
   - mit einem Einschmelzvergaser (3) zur Aufnahme des im Reduktionsschachtofen (1) gebildeten Reduktionsproduktes, wobei

   eine Feinerz- bzw. Erzstaub-Aufgabeeinrichtung (26, 28) sowie eine Aufgabeeinrichtung (27, 29) für feste Kohlenstoffträger, die beide leitungsmäßig vom Reduktionsschachtofen (1) unabhängig sind, leitungsmäßig mit mindestens einem Staubbrenner (17) des Einschmelzvergasers (3) verbunden sind.

11. Anlage nach Anspruch 10, dadurch gekennzeichnet, daß eine Reduktionsgas aus dem Einschmelzvergaser (3) ableitende Gasleitung (4) mit einem Zyklon (5) versehen ist und in den Reduktionsschachtofen (1) mündet, wobei der Zyklon (5) über ein Schleusensystem (16), eine Staubfördereinrichtung (18), wie einen Injektor, und über eine Förderleitung (33) mit dem Staubbrenner (17) des Einschmelzvergasers (3) leitungsmäßig verbunden ist und eine von der Feinerz- bzw. der Erzstaub-Aufgabeeinrichtung (26, 28) ausgehende Chargierleitung (25) in die zwischen dem Einschmelzvergaser (3) und dem Zyklon (5) vorgesehene Gasleitung (4) mündet (Fig. 1, 4).

12. Anlage nach Anspruch 11, dadurch gekennzeichnet, daß die Aufgabeeinrichtung (27, 29) für feste Kohlenstoffträger mit der Chargierleitung (25) für Feinerz bzw. Erzstaub leitungsmäßig verbunden ist (Fig. 1).

13. Anlage nach Anspruch 11, dadurch gekennzeichnet, daß von der Aufgabeeinrichtung (27, 29) für feste Kohlenstoffträger eine eigene Chargierleitung (25') ausgeht und direkt in die die Staubfördereinrichtung (18) mit dem Staubbrenner (17) verbindende Förderleitung (33) mündet (Fig. 4).

14. Anlage nach Anspruch 10, dadurch gekennzeichnet, daß eine Reduktionsgas aus dem Einschmelzvergaser (3) ableitende Gasleitung (4) mit einem Zyklon (5) versehen ist und in den Reduktionsschachtofen (1) mündet, wobei der Zyklon (5) über ein Schleusensystem (16), eine Staubfördereinrichtung (18), wie einen Injektor, und über eine Förderleitung (33) mit dem Staubbrenner (17) des Einschmelzvergasers (3) leitungsmäßig verbunden ist und eine der Feinerz- bzw. der Erzstaub-Aufgabeeinrichtung (26, 28) und der Aufgabeeinrichtung (27, 29) für Kohlenstoffträger gemeinsame Chargierleitung (25) in das Schleusensystem (16) zwischen dem Zyklon (5) und dem Staubbrenner (17) einmündet (Fig. 2).

15. Anlage nach Anspruch 10, dadurch gekennzeichnet, daß eine Reduktionsgas aus dem Einschmelzvergaser (3) ableitende Gasleitung (4) mit einem Zyklon (5) versehen ist und in den Reduktionsschachtofen (1) mündet, wobei der. Zyklon (5) über ein Schleusensystem (16), eine Staubfördereinrichtung (18), wie einen Injektor, und über eine Förderleitung (33) mit dem Staubbrenner (17) des Einschmelzvergasers (3) leitungsmäßig verbunden ist und eine der Feinerz- bzw. der Erzstaub-Aufgabeeinrichtung (26, 28) und der Aufgabeeinrichtung (27, 29) für Kohlenstoffträger gemeinsame Chargierleitung (25) in die Förderleitung (33) zwischen der Staubfördereinrichtung (18) und dem Staubbrenner ( 17 ) mündet (Fig. 3).

**16.** Anlage nach einem oder mehreren der Ansprüche 10 bis 15, dadurch gekennzeichnet, daß in der Chargierleitung (25, 25') ein Schleusensystem (31, 31') vorgesehen ist.

**17.** Anlage nach Anspruch 16, dadurch. gekennzeichnet, daß das Schleusensystem (31, 31') mindestens eine Druckschleusenklappe (20') und einen Staubbehälter (19) sowie gegebenenfalls einen Flachschieber (21) aufweist.

**Claims**

**1.** A melting reducing process for producing molten pig iron or molten steel preproducts from lumpy, iron-containing charging substances, which are reduced by means of a reducing gas in a reduction shaft furnace (1), wherein the obtained reduced iron particles are melted in a melter gasifier (3) under supply of coal and oxygen-containing gas at the simultaneous formation of the reducing gas and the reducing gas is supplied to the reduction zone of the shaft furnace (1), characterized in that in addition to the charging substances used in the reduction shaft furnace (1) fine ore and/or ore dust, such as oxidic iron fine dust incurring in a metallurgical plant, are used while by-passing the reduction shaft furnace (1), the fine ore and/or the ore dust together with solid carbon carriers being supplied to at least one dust burner (17) working into the melter gasifier (3) and being reacted in a substoichiometric combustion reaction, wherein the operation of the burner is set up in such a way that the molar oxygen/combustible ratio is superior to 0.5.

**2.** A process according to claim 1, characterized in that the reducing gas is cooled and dedusted and the dust separated from the reducing gas is returned, together with the fine ore and/or the ore dust as well as the solid carbon carriers, into the melter gasifier (3) via the dust burner (17).

**3.** A process according to claim 2, characterized in that the fine ore and/or the ore dust are introduced into the unpurified reducing gas obtained from the melter gasifier (3) and are pre-heated and pre-reduced therein, whereupon the fine ore and/or the ore dust are separated therefrom together with the dust of the reducing gas and are supplied to the dust burner (17) . (Figs. 1,4).

**4.** A process according to claim 3, characterized in that the solid carbon carriers are admixed to the reducing gas together with the fine ore and/or the ore dust (Fig. 1).

**5.** A process according to claim 3, characterized in that the solid carbon carriers are directly supplied to the dust burner (17) (Fig. 4).

**6.** A process according to claim 2, characterized in that the fine ore and/or the ore dust are directly supplied to the dust burner (17) together with the solid carbon carriers (Fig. 3).

**7.** A process according to claim 2, characterized in that the fine ore and/or the ore dust are supplied, together with the solid carbon carriers and with the dust separated from the reducing gas, to the dust burner (17) via a pressure-compensation sluice system (16) preceding the dust burner (17) (Fig. 2).

**8.** A process according to claim 4 or 7, characterized in that coke is used as solid carbon carrier (Figs. 1, 2).

**9.** A process according to claim 5 or 6, characterized in that coal, in particular coal dust incurring in the process of claim 1, is used as solid carbon carrier (Figs. 3, 4).

**10.** A plant for carrying out the process according to one or several of claims 1 to 9, comprising the following features:

- a reduction shaft furnace (1) for lumpy iron ore and
- a melter gasifier (3) for receiving the reduction product formed in the reduction shaft furnace (1), wherein

a charging means (26, 28) for fine ore and/or ore dust as well as a charging means (27, 29) for solid carbon carriers, which both are not flow-connected to the reduction shaft furnace (1), are flow-connected to at least one dust burner (17) of the melter gasifier (3).

**11.** A plant according to claim 10, characterized in that a gas duct (4) carrying off reducing gas from the melter gasifier (3) is provided with a cyclone (5) and enters into the reduction shaft furnace (1), wherein the cyclone (5) is flow-connected with the dust burner (17) of the melter gasifier (3) via a sluice system (16), a dust conveying means (18) such as an injector, and a conveying duct(33), and a charging duct (25) departing from the fine-ore and/or ore-dust charging means (26, 28) enters into the gas duct (4) provided between the melter gasifier (3) and the cyclone (5) (Figs. 1, 4).

**12.** A plant according to claim 11, characterized in that the charging means (27, 29) for solid carbon carriers is flow-connected with the charging duct (25) for fine ore and/or ore dust (Fig. 1).

**13.** A plant according to claim 11, characterized in that a separate charging duct (25') departs from the charging means (27, 29) for solid carbon carriers and enters directly into the conveying duct (33) connecting the dust conveying means (18) with the dust burner (17) (Fig. 4).

**14.** A plant according to claim 10, characterized in that a gas duct (4) carrying off reducing gas from the melter gasifier (3) is provided with a cyclone (5) and enters into the reduction shaft furnace (1), wherein the cyclone (5) is flow-connected with the dust burner (17) of the melter gasifier (3) via a sluice system (16), a dust conveying means (18) such as an injector, and a conveying duct (33), and a charging duct (25) common to the fine-ore and/or ore-dust charging means (26, 28) and the charging means (27, 29) for carbon carriers enters into the sluice system (16) provided between the cyclone (5) and the dust burner (17) (Fig. 2).

**15.** A plant according to claim 10, characterized in that a gas duct (4) carrying off reducing gas from the melter gasifier (3) is provided with a cyclone (5) and enters into the reduction shaft furnace (1), wherein the cyclone (5) is flow-connected with the dust burner (17) of the melter gasifier (3) via a sluice system (16), a dust conveying means (18) such as an injector, and a conveying duct (33), and a charging duct (25) common to the fine-ore and/or ore-dust charging means (26, 28) and the charging means (27, 29) for carbon carriers enters into the conveying duct (33) provided between the dust conveying means (18) and the dust burner (17) (Fig. 3).

**16.** A plant according to one or several of claims 10 to 15, characterized in that a sluice system (31, 31') is provided in the charging duct (25, 25').

**17.** A plant according to claim 16, characterized in that the sluice system (31, 31') has at least one pressure sluice flap (20') and a dust container (19) and, optionally, a flat slide (21).

### Revendications

**1.** Procédé de réduction à l'état fondu pour la préparation de fonte liquide ou d'ébauches d'acier à l'état liquide à partir de matériaux de fournée en morceaux contenant un minerai de fer, qui sont réduits dans un four à cuve de réduction (1) au moyen d'un gaz réducteur, les particules de fer réduites obtenues étant fondues dans un dispositif de gazéification par fusion (3) avec amenée de charbon et d'un gaz contenant de l'oxygène avec formation simultanée du gaz réducteur, et le gaz réducteur étant amené à la zone de réduction du four à cuve (1), caractérisé en ce qu'en plus des matériaux de fournée introduits dans le four à cuve de réduction (1), on ajoute, par dérivation du four à cuve de réduction (1), des fines de minerai et/ou de la poussière de minerai comme de la poussière volante de fer oxydée produite dans une usine sidérurgique, les fines de minerai et/ou la poussière de minerai étant introduites avec des supports de carbone solide dans au moins un brûleur de poussières (17) travaillant dans le dispositif de gazéification par fusion (3) et étant mises à réagir dans une réaction de combustion de manière inférieure à la stoechiométrie, le fonctionnement du brûleur étant réglé pour que le rapport molaire oxygène-combustible soit supérieur à 0,5.

**2.** Procédé selon la revendication 1, caractérisé en ce que le gaz réducteur est refroidi et dépoussiéré et la poussière séparée du gaz réducteur est réintroduite dans le dispositif de gazéification par fusion (3) via le brûleur de poussières (17) avec les fines de minerai, respectivement la poussière de minerai et les supports de carbone solide.

**3.** Procédé selon la revendication 2, caractérisé en ce que les fines de minerai, respectivement la poussière de minerai, sont introduites dans le gaz réducteur non purifié provenant du dispositif de gazéification par fusion (3) et pré-chauffées et pré-réduites dans ce dernier, les fines de minerai, respectivement la poussière de minerai, avec la poussière du gaz réducteur étant séparées de ce dernier et réintroduites dans le brûleur de poussières (17) (figures 1,4).

**4.** Procédé selon la revendication 3, caractérisé en ce que les supports de carbone solide sont fournis au gaz réducteur avec les fines de minerai, respectivement la poussière de minerai (figure 1).

**5.** Procédé selon la revendication 3, caractérisé en ce que les supports de carbone solide sont fournis directement au brûleur de poussières (17) (figure 4).

**6.** Procédé selon la revendication 2, caractérisé en ce que les fines de minerai, respectivement la poussière de minerai, sont fournies directement au brûleur de poussières (17) avec les supports de carbone solide (figure 3).

**7.** Procédé selon la revendication 2, caractérisé en ce que les fines de minerai, respectivement la poussière de minerai, avec les supports de carbone solide et avec la poussière séparée du gaz réducteur, sont fournies au brûleur de poussières (17) via un système de vannes de compensation de pression (16) placé en amont du brûleur de poussières (17) (figure 2).

**8.** Procédé selon la revendication 4 ou 7, caractérisé en ce qu'on utilise du coke comme support de carbone solide (figures 1, 2).

**9.** Procédé selon la revendication 5 ou 6, caractérisé en ce qu'on utilise comme support de carbone solide du charbon, en particulier de la poussière de charbon produite par le procédé selon la revendication 1 (figures 3, 4).

**10.** Dispositif pour réaliser le procédé selon une ou plusieurs des revendications 1 à 9, ayant les caractéristiques suivantes :

- un four à cuve de réduction (1) pour un minerai de fer en morceaux et
- un dispositif de gazéification par fusion (3) pour la réception du produit de réduction formé dans le four à cuve de réduction (1),

un dispositif d'amenée (26, 28) de fines de minerai, respectivement de poussière de minerai, ainsi qu'un dispositif d'amenée (27, 29) pour les supports de carbone solide, les deux étant indépendants du point de vue canalisation du four à cuve de réduction (1), étant reliés du point de vue canalisation avec au moins un brûleur de poussières (17) du dispositif de gazéification par fusion (3).

**11.** Dispositif selon la revendication 10, caractérisé en ce qu'une conduite de gaz (4) emmenant le gaz réducteur hors du dispositif de gazéification par fusion (3) est prévue avec un cyclone (5) et débouche dans le four à cuve de réduction (1), le cyclone (5) étant relié du point de vue canalisation par l'intermédiaire d'un système de vannes (16), d'un dispositif de transport de poussières (18), comme un injecteur, et d'une conduite de transport (33), au brûleur de poussières (17) du dispositif de gazéification par fusion (3) et une conduite de chargement (25) sortant du dispositif d'amenée (26, 28) de fines de minerai, respectivement de poussière de minerai, débouche dans la conduite de gaz (4) prévue entre le dispositif de gazéification par fusion (3) et le cyclone (5) (figures 1, 4).

**12.** Dispositif selon la revendication 11, caractérisé en ce que le dispositif d'amenée (27, 29) pour les supports de carbone solide est relié du point de vue conduite avec la conduite de chargement (25) pour les fines de minerai, respectivement la poussière de minerai (figure 1).

**13.** Dispositif selon la revendication 11, caractérisé en ce qu'une conduite de chargement (25') séparée sort du dispositif d'amenée (27, 29) pour les supports de carbone solide et débouche directement dans le dispositif de transport de poussières (18) avec la conduite de transport (33) reliée au brûleur de poussières (17) (figure 4).

**14.** Dispositif selon la revendication 10, caractérisé en ce qu'une conduite de gaz (4) emmenant le gaz réducteur hors du dispositif de gazéification par fusion (3) est prévue avec un cyclone (5) et débouche dans le four à cuve de réduction (1), le cyclone (5) étant relié du point de vue canalisation par l'intermédiaire d'un système de vannes (16), d'un dispositif de transport de poussières (18), comme un injecteur, et d'une conduite de transport (33), au brûleur de poussières (17) du dispositif de gazéification par fusion (3) et une conduite de chargement (25) commune au dispositif d'amenée (26, 28) de fines de minerai, respectivement de poussière de minerai, et au dispositif d'amenée (27, 29) pour les supports de carbone solide, débouche dans le système de vannes (16) entre le cyclone (5) et le brûleur de poussières (17) (figure 2).

**15.** Dispositif selon la revendication 10, caractérisé en ce qu'une conduite de gaz (4) emmenant le gaz réducteur hors du dispositif de gazéification par fusion (3) est prévue avec un cyclone (5) et débouche dans le four à cuve de réduction (1), le cyclone (5) étant relié du point de vue canalisation par l'intermédiaire d'un système de vannes (16), d'un dispositif de transport de poussières (18), comme un injecteur, et d'une conduite de transport (33), au brûleur de poussières (17) du dispositif de gazéification par fusion (3) et une conduite de chargement (25) commune au dispositif d'amenée (26, 28) de fines de minerai, respectivement de poussière de minerai, et au dispositif d'amenée (27, 29) pour les supports de carbone solide, débouche dans la conduite de transport (33) entre le dispositif de transport de poussières (18) et le brûleur de poussières (17) (figure 3).

**16.** Dispositif selon une ou plusieurs des revendications 10 à 15, caractérisé en ce que dans la conduite de chargement (25, 25') est prévu un système de vannes (31, 31').

**17.** Dispositif selon la revendication 16, caractérisé en ce que le système de vannes (31, 31') présente au moins un clapet de vanne de pression (20') et un conteneur de poussières (19) et éventuellement un tiroir aplati (21).

FIG. 1

FIG. 2

FIG. 3

FIG. 4